# EUROPEAN PATENT SPECIFICATION

(11) **EP 1 523 054 B1**
(45) Date of publication and mention of the grant of the patent: **26.12.2012**
(21) Application number: 04077533.0
(22) Date of filing: 26.07.2000
(51) Int. Cl.: H01M 8/04, H01M 8/06, H01M 16/00

(54) **Fuel cell system controller**
Brennstoffzellensystemsteuerung
Dispositif de commande d'un système de piles a combustible

(30) Priority: 27.07.1999 US 145900; 26.07.2000 US 626311
(43) Date of publication of application: 13.04.2005
(62) Divisional of application: 00950720.3
(73) Proprietor: IdaTech, LLC., Bend, Oregon 97708-5339 (US)
(72) Inventor: Edlund, David J., Bend, OR 97701 (US); Heron, Thomas G., Bend, OR 97708-5339 (US); Holmes, Craig F., Bend, OR 97701 (US)
(74) Representative: Sanderson, Nigel Paul

(56) References cited:
- EP-A- 0 752 731
- WO-A-98/56058
- JP-A- 10 134 838
- JP-A- 60 030 062
- US-A- 4 098 960
- US-A- 4 839 246
- US-A- 5 624 768
- US-A- 5 798 186

## Description

### Field of the Invention

The invention relates generally to fuel cell systems, and more particularly to a controller for fuel cell systems and fuel cell systems incorporating the same.

### Summary of the Invention

A fuel cell is a device that converts hydrogen gas into electrical power through an electro-chemical reaction. A fuel cell stack is several fuel cells coupled together into one unit. When one of the cells in a fuel cell stack is damaged, it affects the performance of the entire stack, typically by causing the entire stack to fail.

A fuel cell or fuel cell stack may be incorporated into a fuel cell system, which also includes a fuel processor, such as a steam reformer. The system also includes a battery bank, which stores produced electrical power, and an air source, which delivers oxygen to the fuel cell. In such a system, there is a need to control the delivery of power from the fuel cell to prevent damage thereto. There is also a need for a control system to regulate the operation of the system to prevent damage thereto and to optimize the operation thereof responsive to applied loads.

The present invention as defined in the claims provides such a control system, which may be used to meet both of these needs, either together or separately.

Many features of the present invention will become manifest to those versed in the art upon making reference to the detailed description which follows and the accompanying sheets of drawings in which preferred embodiments incorporating the principles of this invention are disclosed as illustrative examples only.

### Brief Description of the Drawings

Fig. 1 is a schematic diagram of a fuel cell system including a control system according to the present invention.
Fig. 2 is a graphical polarization curve for a fuel cell showing cell voltage plotted as a function of current density.
Fig. 3 is a schematic diagram of another embodiment of the fuel cell system of Fig. 1.
Fig. 4 is a schematic diagram of another embodiment of the fuel cell system of Fig. 3.
Fig. 5 is a schematic diagram of another embodiment of the fuel cell system of Fig. 3.
Fig. 6 is a schematic diagram of another embodiment of the fuel cell system of Fig. 3.
Fig. 7 is a schematic diagram of another embodiment of the fuel cell system of Fig. 3.
Fig. 8 is a schematic diagram of a fuel processing assembly.

### Detailed Description and Best Mode of the Invention

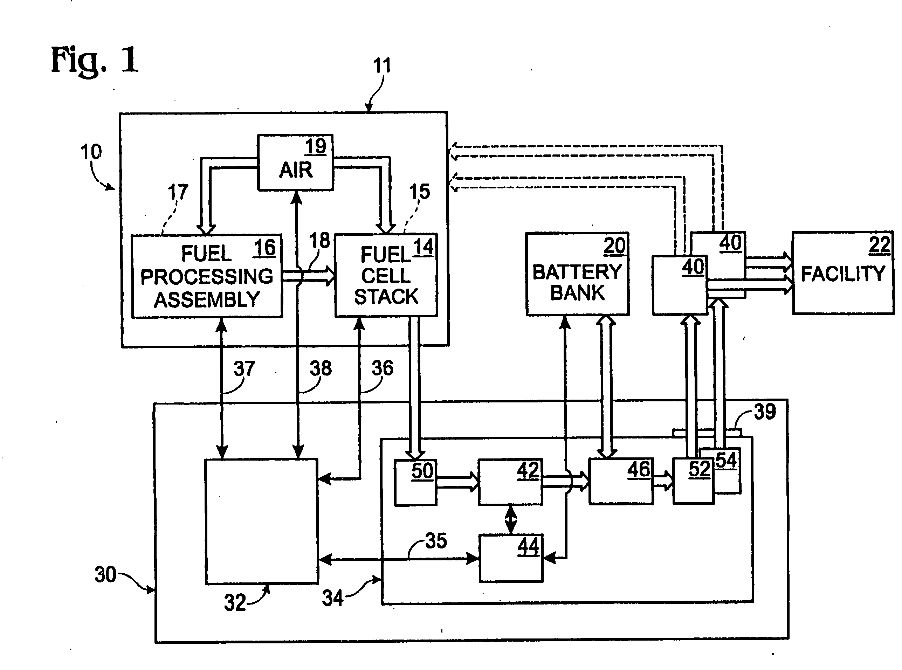

A fuel cell system is shown in Fig. 1 and generally indicated at 10. System 10 includes a fuel cell stack 14 and a fuel processing assembly 16. Fuel cell stack 14 is adapted to produce electrical power from a feed, and fuel processing assembly 16 is adapted to produce a corresponding feed stream 18 for the fuel cell stack from one or more feedstocks. A suitable feed stream is a stream containing, or at least substantially formed from, hydrogen gas, although others may be used as well, depending for example upon the configuration and structure of fuel cell stack 14. As used herein the fuel processing assembly and fuel cell stack are collectively referred to as a fuel processing system and are generally indicated at 11 in Fig. 1. System 11 further includes associated pumps, fluid transport lines, feed storage and/or delivery equipment and related devices.

Fuel cell stack 14 includes one or more fuel cells 15, typically in the form of a fuel cell stack 14 that includes a plurality of fuel cells operatively coupled together. Although referred to herein as a fuel cell stack, it is within the scope of the present invention that fuel cell stack 14 may include only a single fuel cell, a plurality of separately operational fuel cells, or a plurality of separately operational or interconnected fuel cell stacks. Examples of suitable fuel cells include proton exchange membrane (PEM) fuel cells and alkaline fuel cells.

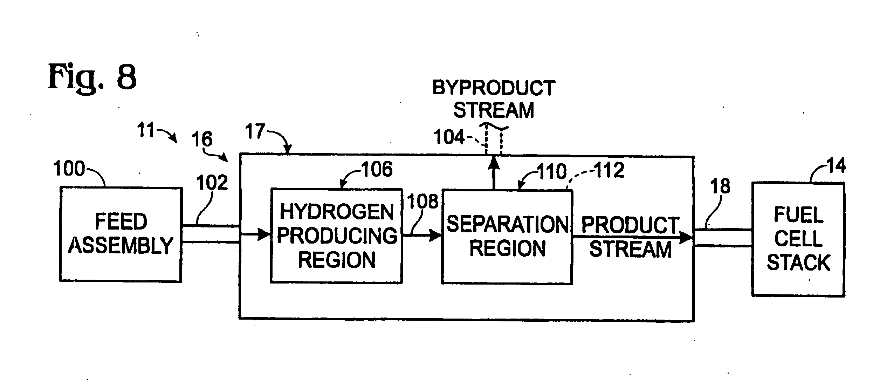

System 10 includes a fuel processing assembly 16, which includes one or more fuel processors 17. An example of a suitable fuel processor is a steam reformer, which produces hydrogen gas through a thermo-chemical reaction, typically involving a feedstock comprising an alcohol or a hydrocarbon. Examples of suitable steam reformers are disclosed in U.S. Patent No. 5,861,137, WO 99/19456 and WO 00/22690. US 4098960 described a fuel cell system comprising a fuel processor being operated in a so-called load-following mode whilst maintaining operation parameters such as temperature and pressure almost constant. A schematic diagram of a suitable fuel processing assembly 16 is shown in Fig. 8. As shown, fuel processing assembly 16 includes a feed assembly 100 that is adapted to deliver one or more feed streams 102 to a fuel processor 17. Fuel processor 17 receives the feed streams and produces product hydrogen stream 18 therefrom. In addition to product hydrogen stream 18, fuel processor 17 may also produce one or more byproduct streams 104. These byproduct streams may be utilized for fuel, heat exchange, or feed. Alternatively, these streams may be harvested for use in other applications.

Fuel processor 17 includes a hydrogen producing region 106, in which a hydrogen-containing stream, or mixed gas stream, 108 is produced from the feed streams. The hydrogen-containing stream typically contains impurities, and therefore is delivered to a separation region, or purification region, 110, where the stream is purified. In the separation region 110, the hydrogen-containing stream is separated into product hydrogen stream 18 and a byproduct stream 104. Separation region 110 includes a membrane module 112, which contains one or more hydrogen permeable metal membranes, such as membranes formed from palladium and palladium alloys.

An example of a membrane module 112 formed from a plurality of hydrogen-selective metal membranes is disclosed in WO 00/22690, In that application, a plurality of generally planar membranes are assembled together into a membrane module having flow channels through which an impure gas stream is delivered to the membranes, a purified gas stream is harvested from the membranes and a byproduct stream is removed from the membranes.

It is within the scope of the present invention that fuel processing assembly 16 may include any suitable device or assembly of devices for producing a stream of hydrogen gas. Examples of other suitable mechanisms that may be used to produce hydrogen gas stream 18 are by autothermal reforming, by partial oxidation of a hydrocarbon or alcohol vapor, by a combination of partial oxidation and steam reforming a hydrocarbon or an alcohol vapor, by pyrolysis of a hydrocarbon or alcohol vapor, and by electrolysis of water. It should be understood that the feedstock for fuel processor 12 will vary depending upon the particular form of fuel processor being used. For example, when fuel processor 76 produces hydrogen through steam reforming, the feedstock will typically include water and an alcohol or hydrocarbon. Autothermal reforming will also include a water component or stream as a part of the feedstock, however, pyrolysis and partial oxidation will not.

In Fig. 1, system 10 is shown including an air source 19, such as a blower or compressor, to supply air to the fuel processing assembly and the fuel cell stack. Air source 19 may be one or more separate units, or it may be incorporated into the fuel cell stack and/or the fuel processing assembly. It should be understood that some embodiments of the invented fuel cell system may not include an air source 19. For example, fuel processing assembly 16 may not have an air stream delivered to it. Similarly, fuel cell stack 14 may have an oxygen gas stream, as opposed to an air stream, delivered to it.

Hydrogen gas produced by fuel processing assembly 16 and oxygen from air source 19 are delivered to fuel cell stack 14, which produces electrical power and water therefrom. The electrical power produced by fuel cell stack 14 is either used to meet electrical loads or stored in battery bank 20. Examples of devices that may draw power from the fuel cell stack include the subsequently described facilities 22, as well as the fuel cell system itself, which draws power for its own electrically powered components. As used herein, a device drawing power from the fuel cell system may also be referred to as the device applying a load to the system.

System 10 further includes a battery bank 20, which stores electrical power produced by fuel cell stack 14. Bank 20 includes one or more batteries or other suitable devices adapted to store electrical power. Battery bank 20 may be used to augment the power provided by cell stack 14, or alternatively, may be used to meet power demands when fuel processing assembly 16 and fuel cell stack 14 are not being used to produce electrical power. Battery bank 20 has a maximum charge, or maximum amount of stored power, and at any particular time has a current level of charge ranging between no stored power and the maximum amount of stored power.

Typically, fuel cell stack 14 and battery bank 20 communicate with and thereby meet the electrical load of one or more power-consuming facilities 22, such as residential, commercial or industrial structures and devices. Examples of such facilities include houses and other dwellings, commercial and small industrial buildings, automobiles, buses, recreational and commercial vehicles, boats, microwave towers, electrical signs and signaling devices, relay stations for communications, such as mobile phones, and any other device which could be powered by a generator or any other source of electrical energy.

Under normal operating conditions, system 10 will meet the power requirements of facility 22. However, problems may arise when the system is unable to meet the load demanded by the facility alone or in combination with other power-consuming devices, such as the balance of plant components described herein. The problems occur because the maximum amount of electrical power available from a fuel cell stack per unit time is finite, but the applied electrical load may exceed the capacity of the system. When this occurs, there are two typical outcomes. The first is that the fuel processing assembly and/or air source cannot meet the fuel cell stack's demands for hydrogen and oxygen needed to meet the applied electrical load (produce the demanded power). This situation results in the fuel cell stack essentially being starved for reactants, which results in the electrical power produced by the fuel cell stack decreasing to zero.

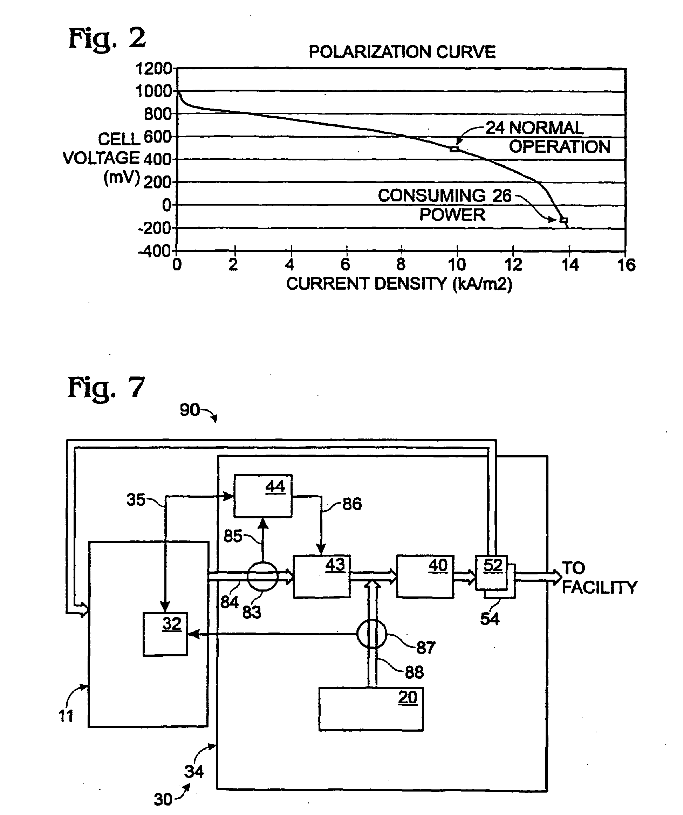

The other outcome occurs when the fuel processing assembly and air source are able to supply sufficient hydrogen and oxygen to the fuel cell stack for the fuel cell stack to exceed its rated output of electrical power responsive to the applied load. The result of this second outcome can perhaps be explained in more detail by referring to the polarization curve shown in Fig. 2, in which cell voltage is plotted as a function of current density. Since fuel cell stack 14 is composed of several like cells, the curve is representative of all cells' performance.

As the demand for electrical power increases, the current increases and the individual fuel cell voltage decreases. For example, a representative operating condition is shown at 24, which is within the rated operational range of the individual fuel cell. As the current continues to increase, the cell potential can even become negative, such as indicated at 26. When this occurs, the cell is consuming power and irreparable damage to the individual fuel cell will occur in a matter of seconds. As stated before, damage to just one individual fuel cell may cause the entire fuel cell stack to fail.

Neither of these outcomes is desirable. From the end user viewpoint, both of the above conditions are system failures simply because no power is being delivered. However, one can appreciate how much more expensive and destructive the second outcome is, compared to the first outcome. In the first outcome, the fuel cell stack turns off safely as it is starved for reactants. In the second outcome, the stack operates outside of the operating parameters for which it was designed.

To prevent either of these outcomes from occurring, system 10 further includes a control system 30, which protects fuel cell stack 14 from having greater than its rated power output drawn therefrom, while also regulating the production of hydrogen from fuel processing assembly 16 to meet the hydrogen demands of the fuel cell stack. Therefore, the control system provides two-fold control of the fuel cell system. It is within the scope of the present invention, however, that each type of subsequently described controller may have separate utility and may be utilized independent of the other type of controller, even though the preferred embodiment of the invention incorporates both controllers into control system 30.

Control system 30, which may also be referred to as a control circuit, controls the demand for electrical power in the form of electrical loads placed on the system without causing damage to fuel cell stack 14. It does this by actively controlling the amount of power drawn from the fuel cell stack by monitoring the voltage and current in the fuel cell stack. System 30 also ensures efficient generation of power by monitoring and controlling the production of the hydrogen in the fuel processor and the available supply of oxygen.

As shown in Fig. 1, control system 30 includes a fuel processing system controller 32 and a charge controller 34. While controllers 32 and 34 may be implemented as a unit or separately, they will be described separately herein for purposes of illustration. The controllers communicate with each other via linkage 35. Of course, when the controllers are implemented as a single unit, no such linkage is needed. It should be understood that control system 30 may include one or more analog or digital circuits or processors, and may include one or more discrete units in communication with each other. Control system 30 may also include or communicate with sensors, switches, and other electrical and/or mechanical circuits, sensors, feedback mechanisms, and the like.

As shown in Fig. 1, fuel processing system controller 32 communicates with fuel cell stack 14, fuel processing assembly 16, and air source 19 via linkages 36, 37 and 38, respectively. Linkages 36-38 preferably enable two-way communication with the controller, thereby enabling the controller to measure or monitor selected values, or selected variables, of units 14-19, while also controlling the operation of these units, typically responsive to the measured values. Examples of values that may be monitored for fuel processing assembly 16 are the mode of operation of the fuel processor or fuel processors 17 forming fuel processing assembly 16, the supply of feedstock, the rate at which hydrogen gas is being produced and the operating temperature of the fuel processor(s). Typical modes of operation for fuel processing assembly 16 are start-up, shutdown, idle, normal (active), and off. Monitored values for fuel cell stack 14 include the voltage and current within the stack and/or individual cells 15, as well as the applied load. An example of a monitored value for the air source is the rate at which air is being supplied to the fuel processing assembly and the fuel cell stack. When air source 19 is incorporated into either or both of the fuel processing assembly and/or fuel cell stack, its operation and measurement will typically be incorporated into the corresponding linkage for the unit into which it is incorporated.

It should be understood that not all of these values are necessarily essential, and that other values may be measured as well, depending on the particular requirements and configuration of the fuel cell system, the complexity of the system and the desired level of control, and particular user preferences. It should be further understood that the linkages may include any suitable interface and/or sensor for effecting the desired monitoring and control.

Charge controller 34 regulates the storage and output of electrical power produced by fuel cell stack 14. As shown in Fig. 1, charge controller 34 is adapted to deliver the produced electrical power to battery bank 20 for storage, deliver the power for use by facility 22, and/or deliver the power to fuel processing system 11.

Charge controller 34 receives electrical power from fuel cell stack 14, and includes an output 39 through which electrical power is delivered to facility 22. The produced electrical power is often, but not necessarily, delivered to one or more dc to ac inverters 40 before being received by facility 22 or delivered to fuel processing system 11 to run its balance of plant electronics. As used herein, balance of plant components refers generally to the pumps, electrically powered sensors, and other electrical devices associated with fuel processing system 11.

It is within the scope of the present invention that inverters 40 may be omitted, such as when facility 22 is adapted to receive dc power. Examples of such a facility include battery chargers, recreational boats and microwave relay stations. Inverters 40 may also be included within charge controller 34 or facility 22. Two inverters are shown in Fig. 1, however as discussed above, system 10 may include as few as zero or one inverter, or may include multiple inverters, depending upon the requirements of the particular system and the facility or facilities to which it provides electrical power.

In Fig. 1, charge controller 34 is shown including a charging unit 42, which may utilize a three-stage pulse-width-modulated method or any other suitable method for charging battery bank 20. Controller 34 also includes a processor 44 that communicates with fuel processor controller 32. Typically this communication includes receiving control signals therefrom and returning monitoring and feedback signals thereto. Charging unit 42 draws power from fuel cell stack 14 responsive to control signals from control system 30. Typically the control signals are sent by controller 32 responsive to the rate of production of hydrogen in fuel processing assembly 16. Therefore, the amount of power drawn by charging unit 42 is regulated, including being limited, responsive to the available supply of hydrogen for fuel cell stack 14. The amount of power drawn from fuel cell stack 14 is also regulated by charge controller 34, via charging unit 42, to ensure that the rated output of fuel cell stack 14 is not exceeded.

Charge controller 34 also includes an electrical bus 46 interconnecting charging unit 42, battery bank 20 and output 39. Battery bank 20 should be configured to correspond to the voltage of the fuel cell stack output and the inverter input. Charge controller 34 may also include various circuit breakers or other switches, safety mechanisms, contactors, sensors and feedback loops in communication with processor 44. For example, as shown in Fig. 1, controller 34 includes an input breaker 50 that is preferably rated at a determined amount greater than the maximum rated power output of fuel cell stack 14. Typically breaker 50 is rated at between approximately 105% and approximately 150% of the maximum rated output of fuel cell stack 14, with ranges between approximately 110% and approximately 135% being preferred and a value of 125% (per current National Electrical Code (NEC) regulations based on the power output of the fuel cell system) proving effective in experimental tests. Other ratings may be used, such as required by local, state or other codes and regulations. Breaker 50 may also include a contactor in communication with processor 44.

Should a spike of electrical power be received from fuel cell stack 14 that exceeds this threshold above the stack's rated maximum output, breaker 50 will be actuated, thereby stopping the delivery of electrical power to charge controller 34. Preferably, breaker 50 communicates with fuel processing system controller 32 (either directly or through charge controller 34) to indicate when the breaker has been actuated. Upon receipt of such a signal, controller 32 can then adjust the operation of fuel cell stack 14 and/or fuel processing assembly 16 accordingly to prevent damage to the system.

Also shown in Fig. 1 is a pair of output breakers 52 and 54. Output breakers 52 and 54 are preferably rated for the power capacity of inverters 40. Although plural output breakers are shown in Fig. 1, it is within the scope of the present invention that one or more such breakers may be used. For example, the number of breakers may correspond to the number of inverters being used. Output breakers 52 and 54 protect the inverters from receiving electrical power that exceeds the capacity of the inverters. Breakers 52 and 54 may also include contactors. Alternatively, breakers 52 and 54 may instead be contactors.

The elements of charge controller 34 are preferably in communication with processor 44, which in turn is in communication with controller 32. This enables the control system to monitor and direct the operation of the individual elements described herein. Direct communication with controller 32 is also within the scope of the invention. It should be understood that two-way communication is not required for all elements, and that some elements may only have one-way (either monitoring or control) communication, or no communication at all. For example, the breakers will typically have no direct communication with control system 30. However, it is within the scope of the invention that any or all of the breakers may be associated with a contactor. The contactors may have only monitoring communication so that the control system can detect when any of the breakers are actuated and direct the operation of the fuel cell system accordingly. However, two-way communication may be preferred to allow increased control of the fuel cell system. For example, two-way communication with the contactors would allow the control system to cause the actuation of the breakers, which may be necessary in emergency situations or when an element of the system is malfunctioning or not communicating with the control system.

The operation of fuel cell system 10 will now be described in more detail, starting from a position in which battery bank 20 is uncharged and fuel processing assembly 16 is turned off. After fuel processing assembly 16 completes its start-up mode and reaches a desired operating temperature, the fuel processing assembly begins producing hydrogen gas, which is delivered to fuel cell stack 14. Stack 14 receives the flow of hydrogen gas from fuel processing assembly 16 and a flow of oxygen (typically in the form of air) from air source 19, and produces electrical power therefrom. This power is delivered to charge controller 34. The power passes through input breaker 50 to charging unit 42 and then to electrical bus 46.

From bus 46, the power travels either to battery bank 20 or output 39, as dictated by Ohm's and/or Kirchhoffl's laws. Therefore, if there is an electrical load being applied to the system, such as from facility 22, the power produced will be outputted to meet the demand. If the power production exceeds the demand, or if there is no demand, the produced power is stored in battery bank 20. Once battery bank 20 is fully charged, a signal is sent to controller 32, which in turn directs fuel processing assembly 16 to shift to an idle, or reduced-output, mode of operation. In this mode of operation, the fuel processor essentially maintains its operating temperature and other conditions while only producing minimal hydrogen. This nominal flow of hydrogen is converted to electrical power used to operate fuel cell system 10 and to maintain the battery bank at a full state of charge. Because its operating conditions are maintained, fuel processing assembly 16 can be quickly ramped up to its normal hydrogen-producing mode of operation without requiring the start-up time and procedure required if the fuel processor had been turned off. Therefore, the fuel processor can respond relatively quickly to changes in the hydrogen demands of the system.

When battery bank 20 is fully charged and fuel processing assembly 16 is turned off or in an idle mode of operation, any electrical load applied to the system will be satisfied from battery bank 20. The status, or level or charge, of battery bank 20 is monitored by control system 30, either by charge controller 34 or fuel processing assembly controller 32. When the charge decreases to a selected minimum level, controller 32 directs fuel processing assembly 16 to resume its normal hydrogen-producing mode of operation. Typically, this entails either shifting from its idle mode to its normal mode, or from its off mode to its start-up and then normal modes of operation. If fuel processing assembly 16 is already in its normal mode of operation when this minimum level is reached, control system 30 limits the amount of power drawn on fuel cell stack 14 to prevent damage to the fuel cell stack, such as would occur if the applied load exceeds the system's capacity. For example, controller 32 may direct charge controller 34 to limit the rate at which the charging unit delivers power to bus 46.

The minimum level of charge at which control system 30 directs fuel processing assembly 16 to be in its normal mode of operation should be selected as a function of such factors as the time required for the fuel processor to reach its normal mode of operation, the remaining charge of battery bank 20, the magnitude of the applied load, etc. Therefore, the minimum level of charge may vary depending upon the particular mode of operation of the fuel processor. Because the fuel processor will reach its normal mode of operation much quicker from its idle, warmed-up mode than when the fuel processor is turned off, it follows that a higher minimum level is required when the fuel processor is turned off. Basically, the minimum value should be selected to ensure that the fuel processor will reach its normal mode of operation before the charge of the battery bank is depleted (or reaches a selected base level of charge).

Preferably, the minimum charge value includes a buffer to provide a safety margin in case of such factors as human or other errors, delays in the fuel processor reaching its normal operating mode, increases in the applied load, etc. The buffer may be a percentage of a theoretical minimum level of charge, such as in the range of approximately 10% and approximately 100% of the theoretical minimum level, with values in the range of approximately 25% and approximately 75% being preferred and a value of approximately 50% of the theoretical minimum level of charge proving sufficient. For example, if a 20% level of charge is determined to be the theoretical minimum level of charge needed to provide power to meet an applied load until fuel cell stack 14 can produce additional power, a value of 30% may be used by control system 30 to provide a safety buffer.

System 30 may utilize a single minimum charge value selected to provide sufficient time for fuel processing assembly 16 to reach its normal operating mode regardless of its current state of operation. Such a value would be determined as the required level of charge of battery bank 20 to meet the maximum applied load for the time necessary for fuel processing assembly 16 to reach its normal operating mode from a cold start. With a single minimum charge value selected to be sufficient for all operating conditions, it follows that, under most operating conditions the battery bank will have more than a sufficient safety margin from being depleted. System 30 may also utilize multiple and different minimum charge values that reflect the energy use patterns of facility 22, as discussed in more detail below.

Once control system 30 directs fuel processing assembly 16 to shift to its normal operating mode and that operating mode is reached, fuel processing assembly 16 begins producing hydrogen, which enables fuel cell stack 14 to produce additional electrical power. The newly produced power travels via the previously described path to bus 46, where it may be used to meet the applied load, recharge battery bank 20, or both. Essentially, the power will follow the path of least resistance from bus 46, with between none and all of the power going to the battery bank and the output of the charge controller, depending on the current charge of the battery bank and applied load.

An important feature of fuel processor controller 32 is that it prevents more than the maximum rated power from being produced by fuel cell stack 14, thereby preventing both of the previously described system failures. Therefore, when the applied load is greater than the maximum power production of fuel cell stack 14, the control system limits the production of electrical power to prevent the fuel cell stack from exceeding its rated maximum. It should be understood that the maximum production defined by fuel processor controller 32 may be some value other than the rated maximum production rate of fuel cell stack 14. For example, it may be desirable to limit production to a value less than the rated maximum, such as 95%, 90% or other values less than the maximum.

Control system 30 also may limit the rate at which fuel cell stack 14 produces electrical power responsive to the capability of fuel processing assembly 16 and air source 19 to provide the fuel cell stack with the required feeds of hydrogen and oxygen. Therefore, if only 75% of the feedstock required to meet the fuel cell stack's theoretical maximum output is available, then the fuel cell controller may limit the production of electrical power to the current production rate/availability of hydrogen and oxygen.

As described above, control system 30 limits the production of electrical power to ensure that the fuel cell stack does not exceed its rated maximum output or the availability of hydrogen or oxygen feedstock, such as from fuel processing assembly 16, air source 19 or another suitable source. In order words, the control system limits the portion of the applied load that is applied to the fuel cell stack. However, this does not mean that fuel cell system 10 cannot safely meet, at least temporarily, loads that exceed the maximum rated output of fuel cell stack 14. Because battery bank 20 stores electrical power, it essentially creates a power reserve that can be used in place of newly produced electrical power, as described above, or as a supplement to the produced electrical power. Therefore, if the applied load exceeds the capacity of fuel cell stack 14, the battery bank can also supply power to meet this load.

The actual distribution of the load met by fuel cell stack 14 and battery bank 20 may vary, depending on such factors as the magnitude of the applied load, the remaining charge of the battery bank, the operating mode of the fuel processor, etc. Of course, it is possible for an applied load to exceed the combined total output of fuel cell stack 14 and battery bank 20. Should this occur, control system 30 will prevent too much power from being drawn from the fuel cell stack, thereby preventing damage to any component of the system.

Another way to describe the relationship between control system 30 with respect to the fuel processing assembly, fuel cell stack and the facility or other electrical power consuming device is as follows:

Fuel processing assembly 16 has a maximum production rate of stream 18, and a currently available production rate of stream 18. The maximum production rate of stream 18 is the maximum rate at which the fuel processing assembly can produce stream 18 within rated, or safe, operating conditions assuming an abundant supply of all necessary feedstock. The currently available production rate of stream 18 is the rate at which stream 18 can be produced by the fuel processing assembly at the particular time in question.

Fuel processing assemblies typically have an off or shutdown configuration, an on or operating configuration, and sometimes include an idle or standby configuration. In the off or shutdown configurations, the fuel processing is not consuming any feedstock, is not producing any output streams and is at an ambient temperature. In the on or operating configurations, the fuel processing assembly is consuming feedstock and producing output stream 18 within its operating parameters (temperature, pressure, etc.) In the standby or idle configuration, the fuel processor is only consuming enough feedstock, and thereby producing a corresponding stream 18) to maintain the fuel processor at or near the operating parameters for its on or operating configurations.

In the on configuration, the currently available production rate of stream 18 is that rate at which stream 18 is actually being produced, while in the off and idle configurations, the currently available production rate is zero and near zero, respectively. The currently available production rate of all three configurations theoretically can be increased up to the maximum production rate, however, the time required to reach this maximum or maximum available rate will differ between these configurations. In all three configurations, the maximum production rate of stream 18 is the same.

The fuel cell stack has a maximum rated power output and a currently available power output. The maximum rated power output is the maximum power output of the stack at safe operating conditions and assuming an abundant feed, such as stream 18. The currently available power output is the power fuel cell stack 14 is capable of producing based upon its current feed, namely stream 18. Therefore, the currently available power output is dependent upon the rate at which stream 18 is supplied, and therefore may be controlled by varying the flow rate of stream 18.

Finally, the fuel cell system also has a maximum rated system power output and a currently available system power output. The maximum rated system power output is the total of the maximum rated power output of the fuel cell stack(s) and the maximum charge (maximum stored power) or the battery bank. The currently available system power output is the combination of the currently available power output of the fuel cell stack(s) and the current level of charge (current stored power) of battery bank 20.

If the production rate demanded by fuel cell stack 14 exceeds the maximum production rate of stream 18, the fuel processing assembly simply cannot provide the feed requirements of fuel cell system 14. On the other hand, if the production rate demanded by fuel cell stack exceeds the currently available production rate of stream 18, the fuel processing assembly cannot meet the feed requirements of the fuel cell system 14 unless and until the currently available production rate is increased or the feed requirements are decreased.

Responsive to various stored and/or measured values, control system 30 regulates the power produced by fuel cell system 10 to failure of, or damage to, the system. This regulating may include limiting the amount of power produced. It may also include causing a component of the system to change its currently available rates. For example, control system 30 may direct fuel processing assembly 16 to produce more hydrogen gas, thereby increasing the currently available power output of fuel cell stack 14 and fuel cell system 10. Control system 30 may also limit the rate at which stream 18 is produced to lower the currently available power output of the fuel cell stack, and thereby lower the currently available power output of the fuel cell system. Control system may also adjust the currently available power output of fuel cell stack 14 to either increase the power drawn from battery bank 20 or to increase the current level of charge (stored power) in the battery bank. The interaction and operations of control system 30 are described in more detail herein.

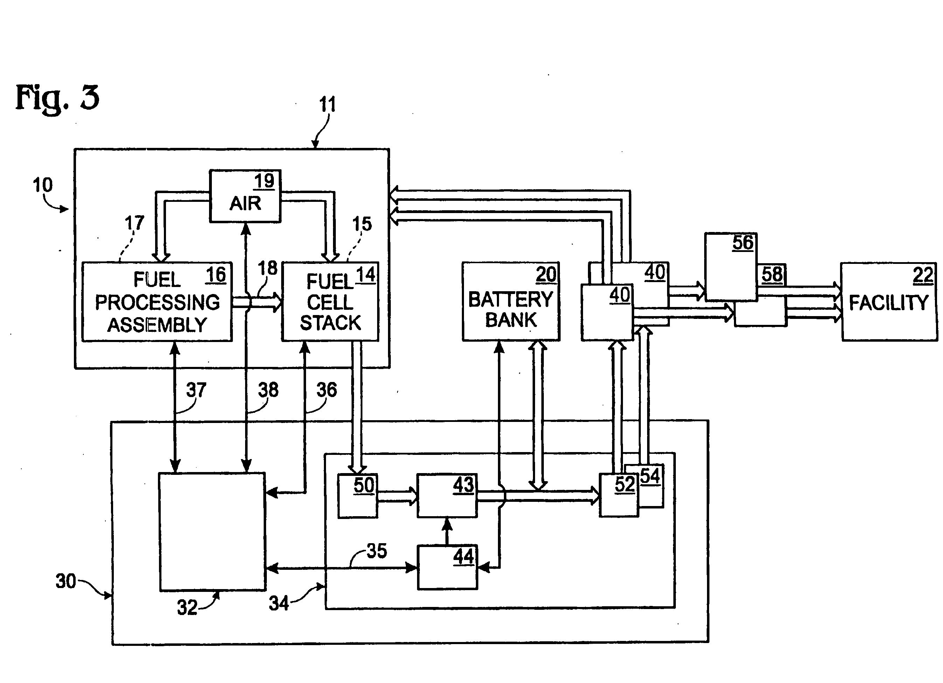

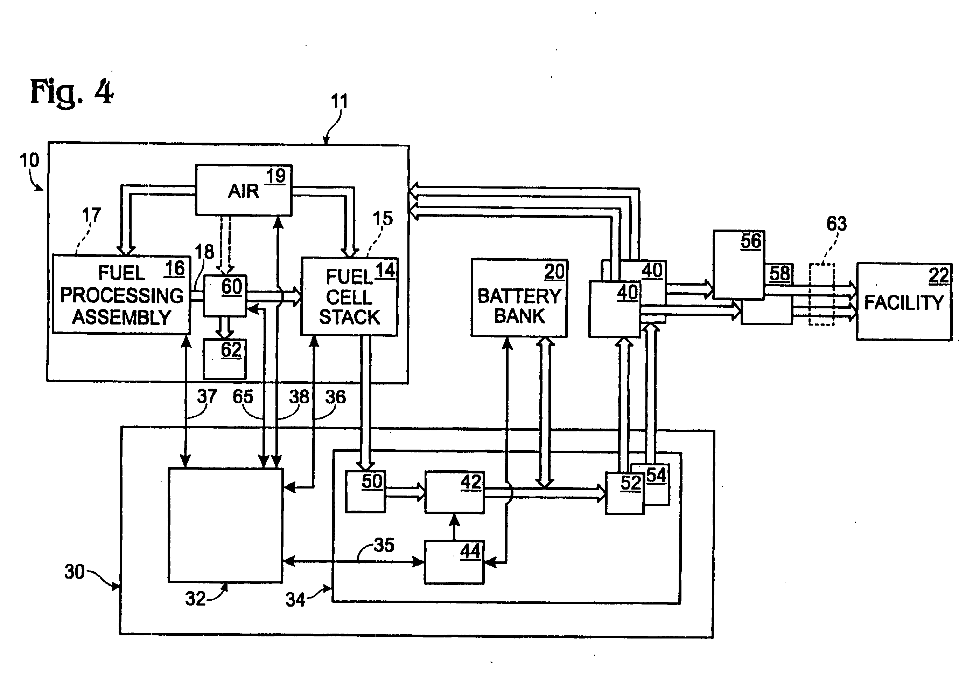

Another embodiment of control system 30 is shown in Fig. 3. As shown, charge controller 34 includes a step-up converter 43 in place of the charging unit 42 and dc bus 46 shown in Fig. 1. It should be understood that the embodiments of the fuel cell system shown in the subsequently discussed Figs. 4-6 may include either the step-up converter of Fig. 3 or the charging unit and dc bus of Fig. 1.

Fuel cell system 10 also provides thermal energy, namely from fuel processing assembly 16, which may be harvested to meet the thermal energy requirements of facility 22. Because fuel processing assembly 16 normally operates at an elevated temperature of at least 200°C, and generally operates in a range of between approximately 200°C and approximately 700°C, one can appreciate that this thermal energy may be used to meet the thermal load of facility 22. For example, the thermal energy may be used to heat water or another fluid, such as oil or air, which can then be used for heating facility 22, or other attached or adjacent facilities.

Another way to meet thermal loads is to produce electrical power and then deliver the power to a resistor assembly 63 to obtain heat. Assembly 63 typically will include one or more resistors. Yet another way is to burn the produced hydrogen to produce heat, which can be harvested directly or through heat exchange to satisfy the thermal demands being placed on system 10. For example, in Fig. 4 system 10 is shown including a bypass 60 through which hydrogen gas produced by fuel processing assembly 16 is delivered to a combustion chamber 62 instead of being delivered to fuel cell stack 14. Combustion chamber 62 may include a combustion catalyst, burner, igniter, or any other suitable mechanism for combusting the hydrogen gas delivered thereto. Combustion chamber 62 may include an air source. When an air source is desirable, air source 19 may also be used to provide a flow of air to the combustion chamber. Yet another way to meet thermal loads is to simply increase the supply rate of fuel to be consumed in fuel processing assembly 16, which will increase the operating temperature of the fuel processor.

Bypass 60 enables hydrogen gas to be harvested from the fuel processor without producing electrical power therefrom. This is particularly useful when the produced electrical power would otherwise overcharge battery bank 20 because the produced power exceeds the load applied by facility 22 and the power necessary to charge battery bank 22. Bypass 60 may accept none, all, or any portion there between of the hydrogen produced by fuel processing assembly 16. For example, in Fig. 4, bypass 60 is shown communicating via linkage 65 with fuel processing system controller 32, which may monitor and control the portion of the produced hydrogen that is sent to combustion chamber 62. By controlling the amount of hydrogen being delivered to fuel cell stack 14, it is possible for fuel processing assembly 16 to operate at its normal full rate of hydrogen production, even though battery bank 20 and facility 22 do not require the amount of power that would otherwise be produced by the produced hydrogen. Instead, the excess hydrogen may be harvested for other applications. This may also include storing the produced hydrogen for later use or for transportation to other systems or hydrogen-consuming applications.

System 10 may be optimized responsive to the average demands of facility 22 over time. With this knowledge, the system can automatically ramp up or down to efficiently meet the demands of the facility. For example, control system 30 may be programmed with the electrical and/or thermal demands of facility 22 as a function of time. These demands may be preprogrammed based on past performance, experimental or theoretical measurements, average demands for similar facilities, etc.

For example, if facility 22 has high energy demands (electrical and/or thermal) for a three-hour time period each day, control system 30, and typically fuel processor controller 32, may be programmed to ramp up fuel processing assembly 16 in sufficient time for system 10 to supply this demand. Preferably, this advance planning for regular demands can enable the fuel cell system to efficiently meet these demands without having to limit the production of power because of a problem that could have been overcome with advance planning. For example, fuel processing assembly 16 should be ramped up to its normal mode of operation in sufficient time to ensure that battery bank 20 is fully charged prior to the high-demand period and that fuel processing assembly 16 is ready to meet the hydrogen demands of fuel cell stack 14.

As another example, facility 22 may have recurring high thermal energy demands during another time period. To anticipate these demands, controller 32 may cause fuel processing assembly 16 to ramp up (i.e., increase the supply rate of fuel and feedstock) prior to this time period to produce heat, which may be harvested through heat exchange with fuel processing assembly 16, to produce additional hydrogen, which may be combusted to produce additional heat, and/or to produce additional electrical power, which may be passed to a resistor to produce heat. By anticipating the recurring electrical and thermal demands of facility 22, control system 30 enables the fuel cell system to efficiently meet these demands. Furthermore this anticipation may even enable system 10 to meet demands that otherwise would exceed the capacity of the system. For example, if facility 22 has a period of recurring thermal and electrical demands, the thermal demands can be lessened or met through heat exchange or heat production other than from power delivered to facility 22. By replacing some or all of the thermal demands with heat generated by fuel processing assembly 16, the system can use its full electrical capacity to meet the applied electrical load, something that otherwise may not have been possible if some of this power was used to satisfy the facility's thermal load.

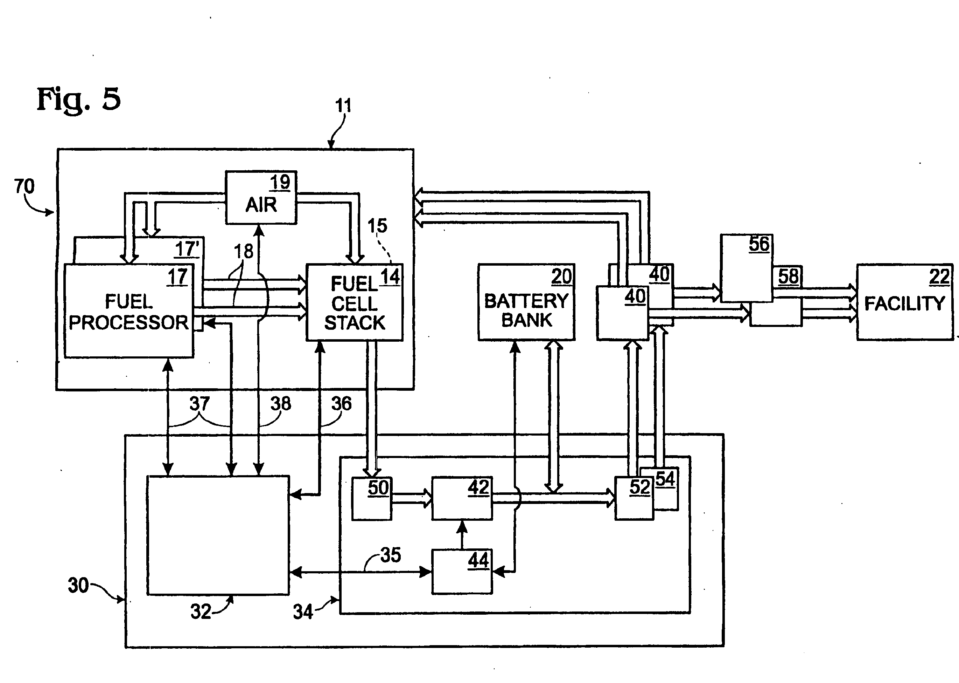

As discussed, the fuel cell system may include more than one fuel processor. An example of such a system is shown in Fig. 5 and indicated generally at 70. Unless otherwise specified, system 70 includes the same elements, subelements and possible variations as the previously described fuel cell system 10. System 70 differs from system 10 in that plural fuel processors 17 and 17' are coupled to a single fuel cell stack 14. It should be understood that system 70 may include more than two fuel processors. For example, it may be desirable to have at least one more fuel processor than necessary to meet any hydrogen demands of fuel cell stack 14. This enables the system to continue operating at up to its maximum rated capacity even if one of the fuel processors is not functioning correctly or is turned off for maintenance or repairs.

Of course, having plural fuel processors in normal operating mode will increase the capability of the system to produce hydrogen, which also enables plural fuel cell stacks to be used to convert this hydrogen to electrical power. When the capacity to produce hydrogen exceeds the hydrogen requirements of the fuel cell stack or stacks, the remaining hydrogen may be stored, such as in a hydride bed or storage vessel/tank, burned for fuel, or transported to another hydrogen-consuming device.

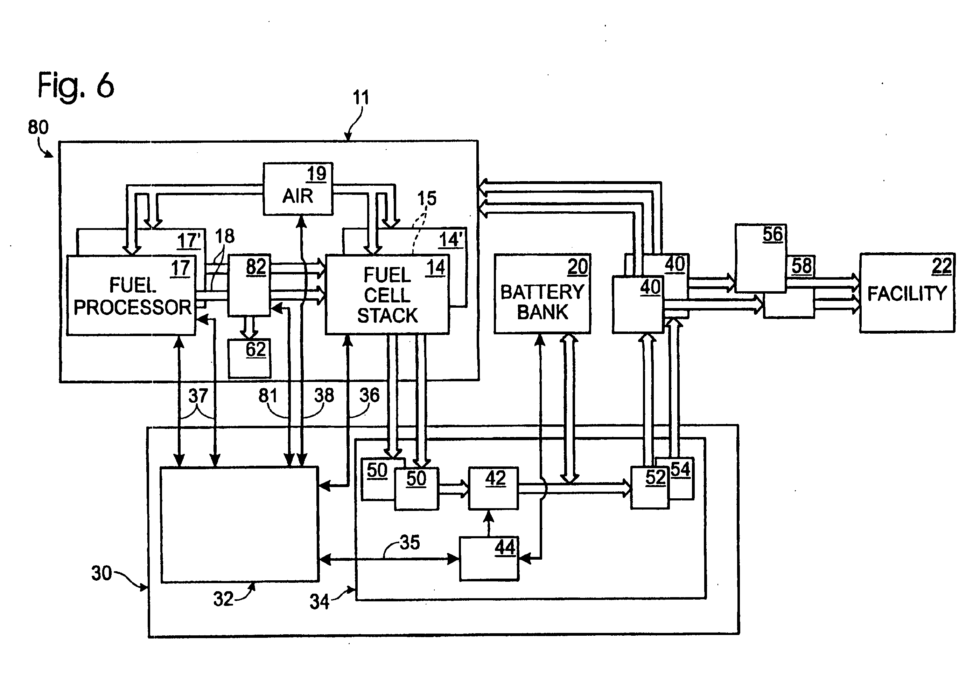

As discussed above, the fuel cell system may include a plurality of fuel cell stacks 14. For example, in Fig. 6 two fuel cell stacks 14 and 14' are shown, each of which may include one or more fuel cells 15, and typically include a plurality of fuel cells. When multiple fuel cell stacks are used, they may be connected in series, parallel, or combinations of both to provide a manageable level of current. When more than one fuel cell stack is utilized, such as shown for example in Fig. 6, the system (generally indicated at 80) may include a distribution manifold 82, which regulates the flow of hydrogen from the one or more fuel processors to the one or more fuel cell stacks. As shown in Fig. 6, manifold 82 communicates with controller 32 via linkage 81, which enables the controller to monitor and direct the distribution of hydrogen from the fuel processors. Manifold 82 may also selectively deliver hydrogen to combustion chamber 62, if the particular embodiment of the fuel cell system includes or is in communication with a combustion chamber. Although two fuel processors and fuel cell stacks are shown in Fig. 6, it should be understood that the system may include more than two of each unit as well, and that it may include differing numbers of each type of unit.

In Fig. 7, a further embodiment of a fuel cell system and controller according to the present invention is shown and generally indicated at 90. As shown, fuel cell system 90 includes a fuel processing system 11, which may include any of the embodiments and variations shown and discussed previously. In Fig. 7, fuel processing system controller 32 is shown incorporated into system 11. Similar to the previously discussed embodiments, controller 32 communicates with processor 44 of charge controller 34 via communication line 35.

Also shown in Fig. 7 are the previously discussed step-up converter 43, inverter 40, battery bank 20 and contactors 52 and 54. Controller 32 adjusts the output of step-up converter 43 to prevent the current drawn from the fuel cell stack from exceeding a selected threshold value. Controller 32 also regulates the flow of hydrogen gas in stream 18 proportional to the current from stack 14 (or another suitable measure of the hydrogen gas consumed in stack 14). Contactors 52 and 54 are adapted to selectively disconnect the ac load to fuel cell stack 14, such as responsive to signals from control system 30.

As discussed, control system 30 may include various sensors. Illustrative examples of suitable sensors are shown in Fig. 7. For example, a sensor 83 is shown measuring electrical power stream 84 produced by system 11, and sensor 83 communicates with processor 44. Similarly, another sensor 87 is shown measuring the electrical power stream 88 from battery bank 20 and communicating with controller 32.

A suitable inverter 40 is rated at 5.5 kW and produces an output voltage of 110V AC. It should be understood that inverters with other power ratings and output voltages may be used as well, depending for example on the configuration of the devices powered by electrical power from fuel cell stack 14. For example, a second inverter may be used to provide 110/220V AC. In an exemplary system 90, the balance of plant components draw approximately 0.8 kW, thereby leaving at least 4.7 kW to be delivered to facility 22.

A suitable step-up converter 43 delivers up to 3.8 kW of nominal 24-volt dc power from fuel cell stack(s) 14 to battery bank 20. Bank 20 should have a capacity to provide start-up power for system 11 and to provide the necessary additional power during peak outputs. As an example, four 12-volt batteries capable of providing 5 kW for at least an hour have proven effective.

### Industrial Applicability

The fuel cell systems and control systems described herein are applicable in any situation where power is to be produced by a fuel cell stack. It is particularly applicable when the fuel cell stack forms part of a fuel cell system that includes a fuel processing assembly that provides a feed for the fuel cell stack.

Included herein is the subject matter of the following paragraphs:
1. A fuel cell system, comprising:
   a fuel processing assembly adapted to produce a feed stream from one or more feedstocks;
   a fuel cell stack including at least one fuel cell, wherein the fuel cell stack is adapted to receive the feed stream from the fuel processing assembly and to produce electrical power therefrom;
   a control system adapted to regulate the rate power is produced by the fuel cell stack responsive to at least one selected variable.
2. The system of paragraph 1, wherein the fuel processing assembly has a maximum production rate of the feed stream, and further wherein the at least one selected variable includes the maximum production rate of the feed stream.
3. The system of paragraph 1, wherein the fuel processing assembly has a currently available production rate of the feed stream, and further wherein the at least one selected variable includes the currently available production rate of the feed stream.
4. The system of paragraph 1, wherein the fuel cell stack has a maximum rated power output, and further wherein the at least one selected variable includes the maximum rated power output of the fuel cell stack.
5. The system of paragraph 1, wherein the fuel cell stack has a currently available power output, and further wherein the at least one selected variable includes the currently available power output of the fuel cell stack.
6. The system of paragraph 1, further including a battery bank adapted to store electrical power, wherein the battery bank has a maximum stored charge, and further wherein the at least one selected variable includes the maximum stored charge of the battery bank.
7. The system of paragraph 1, further including a battery bank adapted to store electrical power, wherein the battery bank has a current level of stored power, and further wherein the at least one selected variable includes the current level of stored power of the battery bank.
8. The system of paragraph 1, wherein the control system includes at least one threshold value for each of the at least one selected variables.
9. The system of paragraph 8, wherein the control system is adapted to regulate the rate power is produced by the fuel cell system if one or more of the selected variables exceed the corresponding at least one threshold value.
10. The system of paragraph 1, wherein the control system is adapted to regulate the rate of power production by the fuel cell system by limiting the currently available power output of the fuel cell stack.
11. The system of paragraph 1, wherein the control system is adapted to regulate the rate of power production by the fuel cell system by adjusting the currently available production rate of the feed stream.
12. The system of paragraph 1, wherein the system is in communication with one or more facilities adapted to load the system to draw power therefrom.
13. The system of paragraph 12, wherein the at least one selected variable includes the load on the system from the one or more facilities.
14. The system of paragraph 12, wherein the load includes a thermal load.
15. The system of paragraph 14, wherein the control system is adapted to regulate the fuel cell system to meet the thermal load.
16. The system of paragraph 12, wherein responsive to the load from the one or more facilities, the fuel cell system provides power to the facility from the fuel cell stack, and further wherein the control system is adapted to limit the power provided by the fuel cell system to prevent the power provided from exceeding a maximum rated power output of the fuel cell stack or a currently available power output of the fuel cell stack.
17. The system of paragraph 1, wherein the fuel cell system includes a battery bank adapted to store power produced from the fuel cell stack.
18. The system of paragraph 17, wherein the battery bank includes a charge of stored power, and further wherein the control system is adapted to regulate the fuel cell system to produce power for increasing the charge of stored power when the charge of stored power falls below a selected threshold.
19. The system of paragraph 1, wherein the feed stream includes hydrogen gas.
20. The system of paragraph 19, wherein the fuel processing assembly includes at least one fuel processor adapted to produce the feed stream by electrolysis of water.
21. The system of paragraph 19, wherein the fuel processing assembly includes at least one fuel processor adapted to produce the feed stream by steam reforming at least one of a hydrocarbon and an alcohol.
22. The system of paragraph 21, wherein the fuel processing assembly is adapted to produce a mixed gas stream from the one or more feedstocks, and further wherein the fuel processing assembly includes a purification region in which the mixed gas stream is separated into the feed stream and at least one byproduct stream.
23. The system of paragraph 22, wherein the purification region includes a membrane module including at least one hydrogen selective membrane.
24. A fuel cell system, comprising:
   a fuel cell stack including at least one fuel cell adapted to produce electrical power from a feed, wherein the fuel cell stack has a maximum rated power output and a currently available power output;
   a control system adapted to regulate the power produced by the fuel cell stack to prevent the power output from exceeding a selected threshold.
25. The system of paragraph 24, wherein the selected threshold is at least one of the maximum rated power output of the fuel cell stack or the currently available power output of the fuel cell stack.
26. The system of paragraph 24, wherein the selected threshold is a selected percentage of at least one of the maximum rated power output of the fuel cell stack or the currently available power output of the fuel cell stack.
27. The system of paragraph 24, further including a battery bank having a currently available charge of stored power and a maximum charge of stored power.
28. The system of paragraph 27, wherein the control system is adapted to regulate the fuel cell system responsive at least in part to the currently available charge of stored power of the battery bank.
29. The system of paragraph 24, further including a fuel processing assembly adapted to produce the feed from at least one feedstock.
30. The system of paragraph 29, wherein the fuel processing assembly includes a currently available rate of producing the feed and a maximum rate of producing the feed.
31. The system of paragraph 30, wherein the control system is adapted to regulate the fuel cell system responsive at least in part to the currently available rate of producing the feed.
32. The system of paragraph 30, wherein the control system is adapted to regulate the fuel cell system responsive at least in part to the maximum rate of producing the feed.
33. The system of paragraph 29, wherein the feed includes hydrogen gas.
34. The system of paragraph 24, wherein the control system is adapted to regulate the fuel cell system responsive at least in part to a load applied to the fuel cell system.
35. The system of paragraph 34, wherein the load includes a demand for electrical power.
36. The system of paragraph 34, wherein the load includes a demand for heat.
37. A fuel cell system, comprising:
   means for producing electrical power from a feed;
   means for controlling the fuel cell system for preventing the electrical power produced by the system from exceeding either a maximum rated power output of the system or a currently available power output of the system.
38. The system of paragraph 37, further including means for producing the feed.
39. The system of paragraph 38, further including means for producing heat responsive to a demand for thermal energy.
40. The system of paragraph 38, wherein the means for controlling include at least one controller adapted to measure at least one selected variable and to regulate the fuel cell system if the at least one selected variable exceeds one or more corresponding threshold values.

## Claims

1. A fuel cell system comprising a fuel cell stack (14), a fuel processing assembly (16) for producing, from one or more feedstocks, a hydrogen feed stream for the fuel cell stack and a control system (30), the control system being configured to maintain the fuel processing assembly in an active mode of operation or in an idle mode of operation, in which idle mode the operating parameters of the fuel processor are maintained essentially at or near the operating parameters for its active mode of operation while producing only minimal hydrogen and wherein the system comprises a battery bank (20) and the hydrogen produced in the idle mode is used to maintain the battery bank at a full state of charge.

2. The system of claim 1 wherein in said idle mode the fuel cell stack (14) is not producing electrical power to satisfy a load applied to the fuel cell system by a power consuming facility (22).

3. The system of claim 1 or 2 which, in addition to the idle and active modes, has start-up, shutdown and off modes.

4. The system of claim 1, 2 or 3 wherein said operating parameters comprise temperature and pressure.

5. The system of any preceding claim wherein the hydrogen produced in the idle mode is converted to electrical power used to operate the system.

6. The system of any preceding claim wherein the hydrogen produced in the idle mode is used to maintain the fuel processor at or near said operating parameters.

7. The system of any preceding claim wherein the battery bank (20), includes one or more batteries or other suitable devices adapted to store electrical power, and wherein power from the fuel cell stack travels either to the battery bank or a power-consuming facility (22), the system being adapted for a signal to be sent to the control system (30) when the battery bank is fully charged and for the control system (30) then to direct the fuel processing assembly (16) to shift to its idle mode.

8. The system of claim 7 wherein the control system (30) is adapted to direct the fuel processing assembly (16) to shift to its active mode when the charge of the battery bank decreases to a selected minimum level.

9. The system of claim 8 wherein, the control system (30) is adapted to limit the amount of power drawn on the fuel cell stack (14) to prevent damage to the fuel cell stack, such as would occur if the applied load exceeded the system's capacity, when the fuel processing assembly (16) is in its active mode of operation when the minimum level is reached.

10. The system of any preceding claim wherein the control system (30) is adapted to protect the fuel cell stack (14) from having greater than its rated power output drawn therefrom.

11. The system of claim 10 when dependent on claim 7 wherein the control system (30) includes a charge controller (34) adapted to deliver the produced electrical power to the battery bank (20) for storage, deliver the power for use by facility (22), and/or deliver the power to the fuel processing system (11).

12. The system of claim 11 wherein the charge controller (34) includes a charging unit (42) for charging the battery bank (20) and adapted to draw power from the fuel cell stack (14) responsive to control signals from the control system (30) such that the amount of power drawn by the charging unit (42) is regulated responsive to the available supply of hydrogen for the fuel cell stack (14).

13. The system of any preceding claim wherein the control system (30) is adapted to regulate the production of hydrogen from the fuel processing assembly (16) to meet the hydrogen demands of the fuel cell stack.

14. The system of claim 13 wherein the fuel processing system controller (32) communicates with the fuel cell stack (14), the fuel processing assembly (16), and an air source (19) via linkages (36, 37 and 38) which enable two-way communication with the controller (32), thereby enabling the controller to measure or monitor selected variables of the fuel cell stack (14), the fuel processing assembly (16) and the air source (19), while also controlling the operation of thereof.

15. The system of claim 14 wherein said values for the fuel processing assembly (16) comprise the mode of operation of the fuel processor or fuel processors (17) forming fuel processing assembly (16), the supply of feedstock, the rate at which hydrogen gas is being produced and the operating temperature of the fuel processor(s).

16. The system of claim 14 or claim 15 wherein said values for the fuel cell stack (14) include the voltage and current within the stack and/or individual cells (15), as well as the applied load.

17. The system of any of claims 14 to 16 wherein said values for the air source (19) comprise the rate at which air is being supplied to the fuel processing assembly (16) and the fuel cell stack (14).

18. The system of any of claims 14 to 17 wherein the air source (19) is incorporated into either or both of the fuel processing assembly (16) and/or the fuel cell stack (14) and its operation and measurement are incorporated into the corresponding linkage for the unit into which it is incorporated.

19. The system of any of claims 13 to 18 when dependent on claim 11 or claim 12 wherein elements of the charge controller (34) are in communication with the fuel processing system controller (32) whether directly or via a processor (44), with which processor said elements of the charge controller (34) are in communication.

20. The system of any preceding claim wherein the control system (30) is adapted to limit the production of electrical power to prevent the fuel cell stack (14) from exceeding its rated maximum when the applied load is greater than the maximum power production of the fuel cell stack (14).

21. The system of any preceding claim wherein the control system (30) is adapted to limit the rate at which the fuel cell stack (14) produces electrical power to ensure that the fuel cell stack (14) does not exceed the availability of hydrogen or oxygen feedstock.

22. A method of operating a fuel cell system comprising a fuel cell stack (14) and a fuel processing assembly (16) for producing, from one or more feedstocks, a hydrogen feed stream for the fuel cell stack, the method including operating the fuel processing assembly in an idle mode of operation in which the fuel processor essentially maintains its operating temperature and pressure at or near the levels of its active mode of operation while producing only minimal hydrogen and wherein the system comprises a battery bank (20) and the hydrogen produced in the idle mode is used to maintain the battery bank at a full state of charge.

23. The method of claim 22 wherein in said idle mode the fuel cell stack (14) is not producing electrical power to satisfy a load applied to the fuel cell system by a power consuming facility (22).

24. The method of claim 22 or 23 wherein the hydrogen produced in the idle mode is converted to electrical power used to operate the system.

25. The method of claim 22, 23 or claim 24 wherein the hydrogen produced in the idle mode is used to maintain the fuel processor at or near said operating parameters.

26. The method of any of claims 22 to 25 wherein the system comprises a battery bank (20) and the hydrogen produced in the idle mode is used to maintain the battery bank at a full state of charge.

27. The method of any of claims 22 to 26 wherein the system comprises a battery bank (20), which bank includes one or more batteries or other suitable devices adapted to store electrical power, and a control system (30) and wherein power from the fuel cell stack travels either to the battery bank or a power-consuming facility (22), in which method a signal is sent to the controller when the battery bank is fully charged and the control system (30) then directs the fuel processing assembly (16) to shift to its idle mode.

28. The method of claim 27 wherein the control system (30) directs the fuel processing assembly (16) to shift to its active mode when the charge of the battery bank decreases to a selected minimum level.

29. The method of claim 28 wherein the control system (30) limits the amount of power drawn on the fuel cell stack (14) to prevent damage to the fuel cell stack, such as would occur if the applied load exceeded the system's capacity, when the fuel processing assembly (16) is in its active mode of operation when the minimum level is reached.

30. The method of any of claims 22 to 29 wherein the control system (30) protects the fuel cell stack (14) from having greater than its rated power output drawn therefrom.

31. The method of claim 30 wherein the control system (30) includes a charge controller (34) which delivers the produced electrical power to battery bank (20) for storage, delivers the power for use by facility (22), and/or delivers the power to fuel processing system (11), the charge controller (34) including a charging unit (42) which charges the battery bank (20) and draws power from the fuel cell stack (14) responsive to control signals from the control system (30) such that the amount of power drawn by charging unit (42) is regulated responsive to the available supply of hydrogen for the fuel cell stack (14).

32. The method of any of claims 22 to 31 wherein the control system (30) regulates the production of hydrogen from fuel processing assembly (16) to meet the hydrogen demands of the fuel cell stack, and optionally wherein the fuel processing system controller (32) communicates with fuel cell stack (14), the fuel processing assembly (16), and an air source (19) via linkages (36, 37 and 38) which enable two-way communication with the controller (32), thereby enabling the controller to measure or monitor selected variables, of fuel cell stack (14), the fuel processing assembly (16) and the air source (19), while also controlling the operation of thereof.

33. The method of claim 32 wherein there are measured values for the fuel processing assembly (16) which comprise the mode of operation of the fuel processor or fuel processors (17) forming fuel processing assembly (16), the supply of feedstock, the rate at which hydrogen gas is being produced and the operating temperature of the fuel processor(s) wherein there are measured values for the fuel cell stack (14) which include the voltage and current within the stack and/or individual cells (15), as well as the applied load and/or wherein there are measured values for the air source (19) which comprise the rate at which air is being supplied to the fuel processing assembly (16) and the fuel cell stack (14).

## Patentansprüche

1. Brennstoffzellensystem, das Folgendes umfasst: einen Brennstoffzellenstapel (14), eine Brennstoffverarbeitungsbaugruppe (16), um von einem oder mehreren Ausgangsmaterialien einen Wasserstoffspeisestrom für den Brennstoffzellenstapel und ein Steuersystem (30) zu erzeugen, wobei das Steuersystem so konfiguriert ist, dass es die Brennstoffverarbeitungsbaugruppe in einem aktiven Betriebsmodus oder in einem Ruhebetriebsmodus hält, wobei die Betriebsparameter des Brennstoffprozessors im Ruhebetriebsmodus im Wesentlichen auf oder nahe den Betriebsparametern für seinen aktiven Betriebsmodus gehalten werden, während nur minimaler Wasserstoff erzeugt wird, und wobei das System eine Batteriegruppe (20) umfasst und der im Ruhemodus erzeugte Wasserstoff zum Halten der Batteriegruppe in einem vollen Ladezustand benutzt wird.

2. System nach Anspruch 1, wobei der Brennstoffzellenstapel (14) in dem genannten Ruhemodus keinen elektrischen Strom erzeugt, um eine durch einen Stromverbraucher (22) auf das Brennstoffzellensystem aufgebrachte Last zu speisen.

3. System nach Anspruch 1 oder 2, das zusätzlich zum Ruhe- und Aktivmodus einen Start-, einen Herunterfahr- und einen Ausschaltmodus hat.

4. System nach Anspruch 1, 2 oder 3, wobei die genannten Betriebsparameter Temperatur und Druck beinhalten.

5. System nach einem der vorherigen Ansprüche, wobei der im Ruhemodus erzeugte Wasserstoff in elektrischen Strom zum Betreiben des Systems umgewandelt wird.

6. System nach einem der vorherigen Ansprüche, wobei der im Ruhemodus erzeugte Wasserstoff zum Halten des Brennstoffprozessors auf oder nahe den genannten Betriebsparametern verwendet wird.

7. System nach einem der vorherigen Ansprüche, wobei die Batteriegruppe (20) eine oder mehrere Batterien oder andere geeignete Vorrichtungen zum Speichern von elektrischem Strom beinhaltet und wobei Strom vom Brennstoffzellenstapel entweder zur Batteriegruppe oder zu einem Stromverbraucher (22) fließt, wobei das System so ausgelegt ist, dass ein Signal zum Steuersystem (20) gesendet wird, wenn die Batteriegruppe voll aufgeladen ist, und wobei das Steuersystem (30) dann die Brennstoffverarbeitungsbaugruppe (16) anweist, in ihren Ruhemodus umzuschalten.

8. System nach Anspruch 7, wobei das Steuersystem (30) so ausgelegt ist, dass es die Brennstoffverarbeitungsbaugruppe (16) anweist, in ihren Aktivmodus umzuschalten, wenn die Ladung der Batteriegruppe auf einen gewählten Mindeststand abfällt.

9. System nach Anspruch 8, wobei das Steuersystem (30) so ausgelegt ist, dass es die Menge an vom Brennstoffzellenstapel (14) gezogenem Strom begrenzt, um Schäden am Brennstoffzellenstapel zu verhindern, die entstehen würden, wenn die anliegende Last die Systemkapazität übersteigen würde, wenn die Brennstoffverarbeitungsbaugruppe (16) bei Erreichen des Mindeststands in ihrem aktiven Betriebsmodus ist.

10. System nach einem der vorherigen Ansprüche, wobei das Steuersystem (30) so ausgelegt ist, dass es den Brennstoffzellenstapel (14) davor schützt, dass ihm mehr als seine Nennleistung abgezogen wird.

11. System nach Anspruch 10 in Abhängigkeit von Anspruch 7, wobei das Steuersystem (30) einen Laderegler (34) zum Zuführen des erzeugten Stroms zur Batteriegruppe (20) zur Speicherung, zum Zuführen des Stroms zur Benutzung durch den Verbraucher (22) und/oder zum Zuführen des Stroms zum Brennstoffverarbeitungssystem (11) beinhaltet.

12. System nach Anspruch 11, wobei der Laderegler (34) eine Ladeeinheit (42) zum Laden der Batteriegruppe (20) aufweist und so ausgelegt ist, dass er Strom aus dem Brennstoffzellenstapel (14) als Reaktion auf Steuersignale vom Steuersystem (30) zieht, so dass die Menge an von der Ladeeinheit (42) gezogenem Strom je nach dem verfügbaren Wasserstoffvorrat für den Bennstoffzellenstapel (14) reguliert wird.

13. System nach einem der vorherigen Ansprüche, wobei das Steuersystem (30) die Aufgabe hat, die Wasserstoffproduktion von der Brennstoffverarbeitungsbaugruppe (16) so zu regulieren, dass der Wasserstoffbedarf des Brennstoffzellenstapels gedeckt wird.

14. System nach Anspruch 13, wobei die Steuerung (32) des Brennstoffverarbeitungssystems mit dem Brennstoffzellenstapel (14), der Brennstoffverarbeitungsbaugruppe (16) und einer Luftquelle (19) über Verbindungen (36, 37 und 38) kommuniziert, die eine Zweiwegkommunikation mit der Steuerung (32) ermöglichen, damit die Steuerung gewählte Variablen des Brennstoffzellenstapels (14), der Brennstoffverarbeitungsbaugruppe (16) und der Luftquelle (19) messen und überwachen und dabei auch deren Betrieb steuern kann.

15. System nach Anspruch 14, wobei die genannten Werte für die Brennstoffverarbeitungsbaugruppe (16) den Betriebsmodus des/der die Brennstoffverarbeitungsbaugruppe (16) bildenden Brennstoffprozessors/-en (17), die Zufuhr von Ausgangsmaterial, die Rate, mit der Wasserstoffgas erzeugt wird, und die Betriebstemperatur des/der Brennstoffprozessors/-en beinhalten.

16. System nach Anspruch 14 oder Anspruch 15, wobei die genannten Werte für den Brennstoffzellenstapel (14) Spannung und Strom in dem Stapel und/oder den einzelnen Zellen (15) sowie die anliegende Last beinhalten.

17. System nach einem der Ansprüche 14 bis 16, wobei die genannten Werte für die Luftquelle (19) die Rate beinhalten, mit der Luft zur Brennstoffverarbeitungsbaugruppe (16) und zum Brennstoffzellenstapel (14) geführt wird.

18. System nach einem der Ansprüche 14 bis 17, wobei die Luftquelle (19) in der Brennstoffverarbeitungsbaugruppe (16) und/oder in der Brennstoffzellenstapel (14) installiert ist und ihr Betrieb und ihre Messung in die entsprechende Verbindung für die Einheit integriert sind, in der sie sich befindet.

19. System nach einem der Ansprüche 13 bis 18 in Abhängigkeit von Anspruch 11 oder Anspruch 12, wobei Elemente des Ladereglers (34) mit der Steuerung (32) des Brennstoffverarbeitungssystems in Kommunikation sind, ob direkt oder über einen Prozessor (44), mit dem die genannten Elemente des Ladereglers (34) in Kommunikation sind.

20. System nach einem der vorherigen Ansprüche, wobei das Steuersystem (30) so ausgelegt ist, dass es die Produktion von elektrischem Strom begrenzt, um zu verhindern, dass der Brennstoffzellenstapel (14) seine maximale Nennleistung übersteigt, wenn die angelegte Last größer ist als die maximale Stromproduktion des Brennstoffzellenstapels (14).

21. System nach einem der vorherigen Ansprüche, wobei das Steuersystem (30) so ausgelegt ist, dass es die Rate begrenzt, mit der der Brennstoffzellenstapel (14) elektrischen Strom erzeugt, um sicherzustellen, dass der Brennstoffzellenstapel (14) die Verfügbarkeit von Wasserstoff- oder Sauerstoffausgangsmaterial nicht übersteigt.

22. Verfahren zum Betreiben eines Brennstoffzellensystems, das einen Brennstoffzellenstapel (14) und eine Brennstoffverarbeitungsbaugruppe (16) umfasst, um von einem oder mehreren Ausgangsmaterialien einen Wasserstoffspeisestrom für den Brennstoffzellenstapel zu erzeugen, wobei das Verfahren das Betreiben der Brennstoffverarbeitungsbaugruppe in einem Ruhebetriebsmodus beinhaltet, in dem der Brennstoffprozessor seine(n) Betriebstemperatur und -druck im Wesentlichen auf oder nahe dem Stand seines aktiven Betriebsmodus hält und dabei nur minimalen Sauerstoff erzeugt, und wobei das System eine Batteriegruppe (20) umfasst und der im Ruhemodus erzeugte Wasserstoff zum Halten der Batteriegruppe in einem vollen Ladezustand benutzt wird.

23. Verfahren nach Anspruch 22, wobei der Brennstoffzellenstapel (14) in dem genannten Ruhemodus keinen elektrischen Strom erzeugt, um eine von einem Stromverbraucher (22) auf das Brennstoffzellensystem aufgebrachte Last zu speisen.

24. Verfahren nach Anspruch 22 oder 23, wobei der im Ruhemodus erzeugte Wasserstoff in elektrischen Strom zum Betreiben des Systems umgewandelt wird.

25. Verfahren nach Anspruch 22, 23 oder Anspruch 24, wobei der im Ruhemodus erzeugte Wasserstoff zum Halten des Brennstoffprozessors auf oder nahe den genannten Betriebsparametern benutzt wird.

26. Verfahren nach einem der Ansprüche 22 bis 25, wobei das System eine Batteriegruppe (20) umfasst und der im Ruhemodus erzeugte Wasserstoff zum Halten der Batteriegruppe in einem vollen Ladezustand benutzt wird.

27. Verfahren nach einem der Ansprüche 22 bis 26, wobei das System eine Batteriegruppe (20) mit einer oder mehreren Batterien oder anderen geeigneten Vorrichtungen zum Speichern von elektrischem Strom sowie ein Steuersystem (30) umfasst und wobei Strom vom Brennstoffzellenstapel entweder zur Batteriegruppe oder zu einem Stromverbraucher (22) fließt, wobei in dem Verfahren ein Signal zur Steuerung gesendet wird, wenn die Batteriegruppe voll aufgeladen ist, und das Steuersystem (30) die Brennstoffverarbeitungsbaugruppe (16) dann anweist, in ihren Ruhemodus umzuschalten.

28. Verfahren nach Anspruch 27, wobei das Steuersystem (30) die Brennstoffverarbeitungsbaugruppe (167) anweist, in ihren aktiven Modus umzuschalten, wenn die Ladung der Batteriegruppe auf einen gewählten Mindeststand abfällt.

29. Verfahren nach Anspruch 28, wobei das Steuersystem (30) die Menge an dem Brennstoffzellenstapel (14) abgezogenem Strom begrenzt, um Schäden an dem Brennstoffzellenstapel zu verhindern, die entstehen würden, wenn die angelegte Last die Systemkapazität übersteigen würde, wenn die Brennstoffverarbeitungsbaugruppe (16) bei Erreichen des Mindeststands in ihrem aktiven Betriebsmodus ist.

30. Verfahren nach einem der Ansprüche 22 bis 29, wobei das Steuersystem (30) den Brennstoffzellenstapel (14) davor schützt, dass ihm mehr als die Nennleistung entzogen wird.

31. Verfahren nach Anspruch 30, wobei das Steuersystem (30) einen Laderegler (34) beinhaltet, der den erzeugten elektrischen Strom der Batteriegruppe (20) zum Speichern zuführt, den Strom zur Benutzung durch den Verbraucher (22) zuführt und/oder den Strom dem Brennstoffverarbeitungssystem (11) zuführt, wobei der Laderegler (34) eine Ladeeinheit (42) beinhaltet, die die Batteriegruppe (20) lädt und Strom als Reaktion auf Steuersignale vom Steuersystem (30) aus dem Brennstoffzellenstapel (14) zieht, so dass die Menge an durch die Ladeeinheit (42) gezogenem Strom je nach dem für den Brennstoffzellenstapel (14) verfügbaren Wasserstoffvorrat reguliert wird.

32. Verfahren nach einem der Ansprüche 22 bis 31, wobei das Steuersystem (30) die Wasserstoffproduktion von der Brennstoffverarbeitungsbaugruppe (16) so regelt, dass der Wasserstoffbedarf des Brennstoffzellenstapels gedeckt wird, und wobei optional die Steuerung (32) des Brennstoffverarbeitungssystems mit dem Brennstoffzellenstapel (14), der Brennstoffverarbeitungsbaugruppe (16) und einer Luftquelle (19) über Verbindungen (36, 37 und 38) kommuniziert, die eine Zweiwegkommunikation mit der Steuerung (32) ermöglichen, damit die Steuerung gewählte Variablen von Brennstoffzellenstapel (14), Brennstoffverarbeitungsbaugruppe (16) und Luftquelle (19) messen oder überwachen und auch deren Betrieb steuern kann.

33. Verfahren nach Anspruch 32, wobei es Messwerte für die Brennstoffverarbeitungsbaugruppe (16) gibt, die den Betriebsmodus des/der die Brennstoffverarbeitungsbaugruppe (16) bildenden Brennstoffprozessors/-en (17), die Zufuhr von Ausgangsmaterial, die Rate, mit der Wasserstoffgas erzeugt wird, und die Betriebstemperatur des/der Brennstoffprozessors/en beinhalten, wobei es Messwerte für den Brennstoffzellenstapel (14) gibt, die Spannung und Strom in dem Stapel und/oder in einzelnen Zellen (15) sowie die angelegte Last beinhalten, und/oder wobei es Messwerte für die Luftquelle (19) gibt, die die Rate beinhalten, mit der Luft der Brennstoffverarbeitungsbaugruppe (16) und dem Brennstoffzellenstapel (14) zugeführt wird.

## Revendications

1. Système de piles à combustible comprenant un assemblage de piles à combustible (14), un ensemble de traitement de combustible (16) pour produire, à partir d'une ou de plusieurs matières de base, un flux d'alimentation en hydrogène pour l'assemblage de piles à combustible, et un système de commande (30), le système de commande étant configuré pour maintenir l'ensemble de traitement de combustible dans un mode de fonctionnement actif ou dans un mode de fonctionnement de veille, dans ce mode de veille les paramètres d'exploitation du processeur de combustible sont maintenus sensiblement au niveau, ou au voisinage, des paramètres d'exploitation pour son mode d'exploitation actif tout en ne produisant qu'une quantité minimale d'hydrogène, et cas dans lequel le système comporte un groupe de batteries (20) et l'hydrogène produit en mode de veille sert à maintenir le groupe de batteries à un état de pleine charge.

2. Système selon la revendication 1, dans ledit mode de veille l'assemblage de piles à combustible (14) ne produisant pas d'énergie électrique pour satisfaire une charge appliquée au système de piles à combustible par un équipement de consommation d'énergie (22).

3. Système selon la revendication 1 ou 2 qui, en plus du mode Veille et Actif, offre des modes Démarrage, Mise à l'arrêt et Hors circuit.

4. Système selon la revendication 1, 2 ou 3, les paramètres d'exploitation englobant la température et la pression.

5. Système selon l'une quelconque des revendications précédentes, l'hydrogène produit en mode de veille étant converti en énergie électrique laquelle sert à faire fonctionner le système.

6. Système selon l'une quelconque des revendications précédentes, l'hydrogène produit en mode de veille servant à maintenir le processeur de combustible au niveau, ou au voisinage, desdits paramètres d'exploitation.

7. Système selon l'une quelconque des revendications précédentes, le groupe de batteries (20) englobant une ou plusieurs batteries ou autres dispositifs appropriés conçus pour stocker de l'énergie électrique, et cas dans lequel l'énergie émanant de l'assemblage de piles à combustible se rend soit vers le groupe de batteries soit vers un équipement de consommation d'énergie (22), le système étant conçu pour qu'un signal soit envoyé au système de commande (30) lorsque le groupe de batteries est entièrement chargé et pour que le système de commande (30) ordonne ensuite à l'ensemble de traitement de combustible (16) de commuter vers son mode de veille.

8. Système selon la revendication 7, le système de commande (30) étant conçu pour ordonner à l'ensemble de traitement de combustible (16) de commuter vers son mode actif lorsque la charge du groupe de batteries baisse jusqu'à un niveau minimum sélectionné.

9. Système selon la revendication 8, le système de commande (30) étant conçu pour limiter la quantité d'énergie soutirée de l'assemblage de piles à combustible (14) afin d'éviter tout endommagement de l'assemblage de piles à combustible, tel celui qui se produirait si la charge appliquée dépassait la capacité du système, lorsque l'ensemble de traitement de combustible (16) se trouve dans son mode de fonctionnement actif une fois que le niveau minimum a été atteint.

10. Système selon l'une quelconque des revendications précédentes, le système de commande (30) étant conçu pour protéger l'assemblage de piles à combustible (14) pour éviter que de l'énergie, supérieure à sa sortie d'énergie nominale, ne lui soit soutirée.

11. Système selon la revendication 10 lorsqu'elle est dépendante de la revendication 7, le système de commande (30) comportant un contrôleur de charge (34) conçu pour acheminer l'énergie électrique produite au groupe de batteries (20) en vue de son stockage, acheminer l'énergie en vue de son utilisation par un équipement (22), et/ou acheminer l'énergie au système de traitement de combustible (11).

12. Système selon la revendication 11, le contrôleur de charge (34) comportant une unité de charge (42) pour charger le groupe de batteries (20), et étant conçu pour soutirer de l'énergie à l'assemblage de piles à combustible (14) en réaction à des signaux de commande en provenance du système de commande (30) de sorte que la quantité d'énergie soutirée par l'unité de charge (42) soit régulée en réaction à l'alimentation disponible en hydrogène pour l'assemblage de piles à combustible (14).

13. Système selon l'une quelconque des revendications précédentes, le système de commande (30) étant conçu pour réguler la production d'hydrogène issue de l'ensemble de traitement de combustible (16) afin de répondre aux demandes en hydrogène de l'assemblage de piles à combustible.

14. Système selon la revendication 13, le contrôleur du système de traitement de combustible (32) étant en communication avec l'assemblage de piles à combustible (14), l'ensemble de traitement de combustible (16) et une source d'air (19) par l'intermédiaire de liaisons (36, 37 et 38) lesquelles procurent une communication bidirectionnelle avec le contrôleur (32), ce qui permet par conséquent au contrôleur de mesurer ou de surveiller des variables sélectionnées sur l'assemblage de piles à combustible (14), l'ensemble de traitement de combustible (16) et la source d'air (19), tout en pilotant également le fonctionnement de ceux-ci.

15. Système selon la revendication 14, lesdites valeurs pour l'ensemble de traitement de combustible (16) comprenant le mode de fonctionnement du processeur de combustible ou des processeurs de combustible (17) constituant l'ensemble de traitement de combustible (16), l'alimentation en matières de base, la cadence à laquelle l'hydrogène gazeux est produit et la température de service du processeur ou des processeurs de combustible.

16. Système selon la revendication 14 ou la revendication 15, lesdites valeurs pour l'assemblage de piles à combustible (14) englobant la tension et le courant présents dans l'assemblage et/ou dans les piles individuelles (15), ainsi que la charge appliquée.

17. Système selon l'une quelconque des revendications 14 à 16, lesdites valeurs pour la source d'air (19) englobant la cadence à laquelle l'air est acheminé à l'ensemble de traitement de combustible (16) et à l'assemblage de piles à combustible (14).

18. Système selon l'une quelconque des revendications 14 à 17, la source d'air (19) étant incorporée à l'un des postes suivants, ou aux deux, à savoir l'ensemble de traitement de combustible (16) et/ou l'assemblage de piles à combustible (14), et son fonctionnement et sa mesure étant incorporés à la liaison correspondant à l'unité à laquelle elle est incorporée.

19. Système selon l'une quelconque des revendications 13 à 18 lorsqu'elle est dépendante de la revendication 11 ou de la revendication 12, les éléments du contrôleur de charge (34) étant en communication avec le contrôleur du système de traitement de combustible (32), que ce soit directement ou par l'intermédiaire d'un processeur (44), alors que lesdits éléments du contrôleur de charge (34) sont en communication avec ce processeur.

20. Système selon l'une quelconque des revendications précédentes, le système de commande (30) étant conçu pour limiter la production d'énergie électrique pour éviter que l'assemblage de piles à combustible (14) ne dépasse sa valeur maximale nominale lorsque la charge appliquée est supérieure à la production maximale d'énergie de l'assemblage de piles à combustible (14).

21. Système selon l'une quelconque des revendications précédentes, le système de commande (30) étant conçu pour limiter la cadence à laquelle l'assemblage de piles à combustible (14) produit de l'énergie électrique pour veiller à ce que l'assemblage de piles à combustible (14) ne dépasse pas la disponibilité de la matière de base, à savoir l'hydrogène ou l'oxygène.

22. Procédé d'exploitation d'un système de piles à combustible comprenant un assemblage de piles à combustible (14), et un ensemble de traitement de combustible (16) pour produire, à partir d'une ou de plusieurs matières de base, un flux d'alimentation en hydrogène pour l'assemblage de piles à combustible, le procédé englobant l'exploitation de l'ensemble de traitement de combustible dans un mode de fonctionnement de veille dans lequel le processeur de combustible maintient sensiblement sa température et sa pression de service au niveau, ou au voisinage, des niveaux de son mode de fonctionnement actif, tout en ne produisant qu'une quantité minimale d'hydrogène, et cas dans lequel le système comporte un groupe de batteries (20) et l'hydrogène produit en mode de veille sert à maintenir le groupe de batteries à un état de pleine charge.

23. Procédé selon la revendication 22, dans ledit mode de veille l'assemblage de piles à combustible (14) ne produisant pas d'énergie électrique pour satisfaire une charge appliquée au système de piles à combustible par un équipement de consommation d'énergie (22).

24. Procédé selon la revendication 22 ou 23, l'hydrogène produit en mode de veille étant converti en énergie électrique laquelle sert à faire fonctionner le système.

25. Procédé selon la revendication 22, 23 ou la revendication 24, l'hydrogène produit en mode de veille servant à maintenir le processeur de combustible au niveau, ou au voisinage, desdits paramètres d'exploitation.

26. Procédé selon l'une quelconque des revendications 22 à 25, le système comportant un groupe de batteries (20) et l'hydrogène produit en mode de veille servant à maintenir le groupe de batteries à un état de pleine charge.

27. Procédé selon l'une quelconque des revendications 22 à 26, le système comprenant un groupe de batteries (20), ce groupe englobant une ou plusieurs batteries ou autres dispositifs appropriés conçus pour stocker de l'énergie électrique, et un système de commande (30), et cas dans lequel l'énergie émanant de l'assemblage de piles à combustible se rend soit vers le groupe de batteries soit vers un équipement de consommation d'énergie (22), dans le cadre de ce procédé un signal étant envoyé au contrôleur lorsque le groupe de batteries est entièrement chargé et le système de commande (30) ordonnant ensuite à l'ensemble de traitement de combustible (16) de commuter vers son mode de veille.

28. Procédé selon la revendication 27, le système de commande (30) étant conçu pour ordonner à l'ensemble de traitement de combustible (16) de commuter vers son mode actif lorsque la charge du groupe de batteries baisse jusqu'à un niveau minimum sélectionné.

29. Procédé selon la revendication 28, le système de commande (30) limitant la quantité d'énergie soutirée de l'assemblage de piles à combustible (14) afin d'éviter tout endommagement de l'assemblage de piles à combustible, tel celui qui se produirait si la charge appliquée dépassait la capacité du système, lorsque l'ensemble de traitement de combustible (16) se trouve dans son mode de fonctionnement actif une fois que le niveau minimum a été atteint.

30. Procédé selon l'une quelconque des revendications 22 à 29, le système de commande (30) protégeant l'assemblage de piles à combustible (14) pour éviter que de l'énergie, supérieure à sa sortie d'énergie nominale, ne lui soit soutirée.

31. Procédé selon la revendication 30, le système de commande (30) englobant un contrôleur de charge (34) qui achemine l'énergie électrique produite au groupe de batteries (20) en vue de son stockage, achemine l'énergie en vue de son utilisation par un équipement (22), et/ou achemine l'énergie au système de traitement de combustible (11), le contrôleur de charge (34) comportant une unité de charge (42) qui charge le groupe de batteries (20) et soutire de l'énergie à l'assemblage de piles à combustible (14) en réaction à des signaux de commande en provenance du système de commande (30) de sorte que la quantité d'énergie soutirée par l'unité de charge (42) soit régulée en réaction à l'alimentation disponible en hydrogène pour l'assemblage de piles à combustible (14).

32. Procédé selon l'une quelconque des revendications 22 à 31, le système de commande (30) régulant la production d'hydrogène issue de l'ensemble de traitement de combustible (16) afin de répondre aux demandes en hydrogène de l'assemblage de piles à combustible, et facultativement cas dans lequel le contrôleur du système de traitement de combustible (32) est en communication avec l'assemblage de piles à combustible (14), l'ensemble de traitement de combustible (16) et une source d'air (19) par l'intermédiaire de liaisons (36, 37 et 38) lesquelles procurent une communication bidirectionnelle avec le contrôleur (32), ce qui permet par conséquent au contrôleur de mesurer ou de surveiller des variables sélectionnées sur l'assemblage de piles à combustible (14), l'ensemble de traitement de combustible (16) et la source d'air (19), tout en pilotant également le fonctionnement de ceux-ci.

33. Procédé selon la revendication 32, les valeurs mesurées pour l'ensemble de traitement de combustible (16) comprenant le mode de fonctionnement du processeur de combustible ou des processeurs de combustible (17) constituant l'ensemble de traitement de combustible (16), l'alimentation en matières de base, la cadence à laquelle l'hydrogène gazeux est produit et la température de service du processeur ou des processeurs de combustible, cas dans lequel les valeurs mesurées pour l'assemblage de piles à combustible (14) englobent la tension et le courant présents dans l'assemblage et/ou dans les piles individuelles (15), ainsi que la charge appliquée et/ou cas dans lequel les valeurs mesurées pour la source d'air (19) englobent la cadence à laquelle l'air est acheminé à l'ensemble de traitement de combustible (16) et à l'assemblage de piles à combustible (14).
